# EUROPÄISCHE PATENTSCHRIFT

(11) **EP 0 609 508 B1**
(45) Veröffentlichungstag und Bekanntmachung des Hinweises auf die Patenterteilung: **24.07.1996**
(21) Anmeldenummer: 93119074.8
(22) Anmeldetag: 26.11.1993
(51) Int. Cl.: B60R 1/06

(54) **Verstellbare Rückspiegelanordnung für Kraftfahrzeuge**
Adjustable rearview unit for automotive vehicle
Ensemble rétroviseur réglable pour véhicules à moteur

(30) Priorität: 03.02.1993 DE 4302950
(43) Veröffentlichungstag der Anmeldung: 10.08.1994
(73) Patentinhaber: MEKRA Lang GmbH & Co. KG, D-90765 Fürth (DE)
(72) Erfinder: Lang, Heinrich, D-91465 Ergersheim (DE); Seiboth, Wolfgang, D-91438 Bad Windsheim (DE)
(74) Vertreter: Rau, Manfred, Dr. Dipl.-Ing.

(56) Entgegenhaltungen:
- EP-A- 0 276 677
- EP-A- 0 337 059
- DE-A- 3 825 648
- US-A- 4 981 279

## Beschreibung

Die Erfindung betrifft eine verstellbare Rückspiegelanordnung für Kraftfahrzeuge und insbesondere für Nutzfahrzeuge nach dem Oberbegriff des Anspruches 1.

Eine derartige Rückspiegelanordnung ist in der älteren DE-A-4 233 255 (deutschen Patentanmeldung P 42 33 255.9) angegeben. Nähere Angaben über die Verbindung der darin vorgesehenen Halteplatte zur verstellbaren Lagerung des Rückspiegels im Gehäuse und einer mit dieser verbindbaren Spiegeltragplatte zur Halterung einer Spiegelglasscheibe sind in der Anmeldung nicht gemacht.

Weiterhin ist aus der DE-A-3 825 648 ein verstellbarer Rückspiegel bekannt, bei dem die Spiegelglasscheibe an einem Spiegelglashalter mittels eines zumindest teilweise lösbar mit letzterem verbundenen Halterahmens gehalten ist.

Nachteilig bei dieser Konstruktion ist die Tatsache, daß einerseits ein relativ filigran ausgebildeter Halterahmen zur Halterung der losen Spiegelglasscheibe verwendet wird. Darüber hinaus ist die Spiegelglasscheibe während der Montage des Spiegels ohne spezielle schützende und unterstützende Unterkonstruktion zu handhaben, was die Montage unnötig verkompliziert.

Der Erfindung liegt die Aufgabe zugrunde, eine verstellbare Rückspiegelanordnung der gattungsgemäßen Art so zu verbessern, daß eine stark vereinfachte Montage der Spiegelglasscheibe unter gleichzeitiger Herstellung einer ausreichend stabilen und sicheren Lagerung möglich ist.

Diese Aufgabe wird durch die im Kennzeichnungsteil des Anspruches 1 angegebenen Merkmale gelöst. Demnach ist eine Klemmschlußverbindung zwischen der Halteplatte und der die Spiegelglasscheibe haltenden Spiegeltragplatte derart vorgesehen, daß Verbindungsvorsprünge an der Halteplatte in komplementär geformte Hinterschneidungsbereiche an der Spiegeltragplatte parallel zur Plattenebene einschiebbar sind. Durch den Klemmschluß wird dabei eine hohe Stabilität der Verbindung gewährleistet, wobei die Einfachheit der Montage durch die simple Schiebebewegung erzielt wird. Gleichzeitig wird die Spiegelscheibe bei der Montage nicht als solche, sondern befestigt in der Spiegeltragplatte und damit geschützt gehandhabt.

Die Ansprüche 2 und 3 kennzeichnen vorteilhafte Ausbildungen der Verbindungsvorsprünge an der Halteplatte bzw. von entsprechenden Haltefortsätzen zur Bildung von Hinterschneidungsbereichen an der Spiegeltragplatte.

Durch die nach Anspruch 4 vorgesehenen Abstützrippen sind die Hinterschneidungsbereiche an der Spiegeltragplatte exakt definiert, wobei dann die Spiegeltragplatte selbst entsprechend einer Wölbung der Spiegelglasscheibe ebenfalls gewölbt ausgebildet sein kann.

Die in den Ansprüchen 5 und 6 angegebenen Dimensionierungsvorschriften dienen einer Optimierung der Klemmschlußes zwischen Halte- und Spiegeltragplatte, da aufgrund dieser Maßnahmen bezogen auf eine vorgegebene Größe der Halteplatte maximale Längen der den Klemmschluß zwischen Halte-und Spiegeltragplatte herstellenden Verbindungsvorsprünge bzw. Haltefortsätze erreicht werden.

Die nach Anspruch 7 vorgesehenen Querstege bilden Endanschläge sowohl für die Montage-Ausgangsposition als auch Montage-Endposition, wodurch sich wiederum eine Montagevereinfachung ergibt.

Demselben Zweck dienen die nach Anspruch 8 vorgesehenen Einführnasen an den Haltefortsätzen der Spiegeltragplatte.

Eine zusätzliche Sicherung der Klemmschlußverbindung zwischen Halte- und Spiegeltragplatte wird durch die in den Ansprüchen 9 und 10 angegebenen Maßnahmen erzielt.

Sollte wider Erwarten - beispielsweise aufgrund übermäßiger Gehäusevibrationen - die Klemmschlußverbindung zwischen Halte- und Spiegeltragplatte nicht ausreichend stabil sein und die gegebenenfalls vorhandene zusätzliche Rastsicherung zwischen diesen beiden Bauteilen überwunden werden, so ist als zusätzliche Sicherung nach Anspruch 11 vorgesehen, daß die Spiegeltragplatte mit der Spiegelglasscheibe so in der üblichen Gehäuseöffnung angeordnet ist, daß eine vollständige Lösung des Schiebeeingriffes zwischen der Spiegeltrag- und Halteplatte bei einer "normalen" Einstellung des Rückspiegels unmöglich ist. Damit kann die Spiegeltragplatte mit der Spiegelscheibe nicht unbeabsichtigt aus ihrer Halterung im Gehäuse herausfallen. Erst wenn die Lageranordnung in eine stark verkippte Montagestellung verbracht worden ist, kann der Schiebeeingriff der Spiegeltragplatte mit der Halteplatte beispielweise zum Austausch einer defekten Spiegelglasscheibe gelöst bzw. bei der Montage der erfindungsgemäßen Rückspiegelanordnung hergestellt werden.

Weitere Merkmale, Einzelheiten und Vorteile der Erfindung sind der nachfolgenden Beschreibung entnehmbar, in der ein Ausführungsbeispiel des Erfindungsgegenstandes anhand der beiliegenden Figuren näher erläutert wird. Es zeigen:
- Fig. 1: einen Außenspiegel gemäß der Erfindung in Draufsicht,
- Fig. 2: eine Seitenansicht des Spiegel nach Fig. 1,
- Fig. 3: einen Querschnitt durch den Spiegel nach Fig. 1 und 2 entlang der Schnittlinie III-III nach Fig. 2
- Fig. 4: eine Draufsicht auf eine Halte- und Spiegeltragplatte in verrasteter Stellung aus Pfeilrichtung IV nach Fig. 3
- Fig. 5: einen Horizontalschnitt durch diese Anordnung gemäß Schnittlinie V-V nach Fig. 4,
- Fig. 6: einen Vertikalschnitt durch die Anordnung entlang der Schnittlinie VI-VI nach Fig. 4 in Montage-Ausgangsstellung und
- Fig. 7: einen Vertikalschnitt gemäß Fig. 6 in Montage-Endstellung der Anordnung.

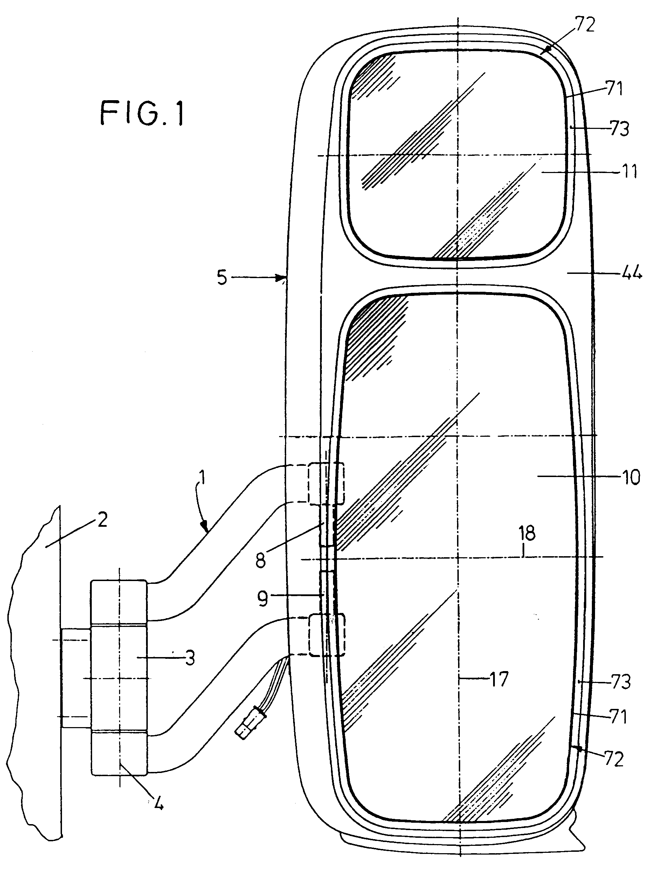

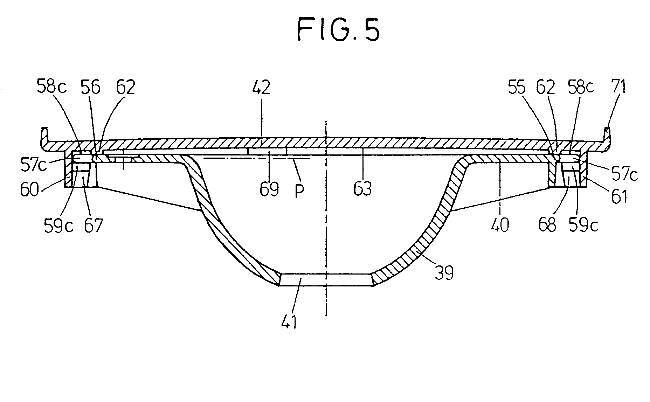

Der in den Fig. 1 bis 6 dargestellte Außenspiegel für ein Nutzfahrzeug ist als Doppelspiegel ausgebildet. Er weist einen als doppelarmigen Stützarm 1 ausgebildeten Halter zur Befestigung des Spiegels an einem in Fig. 1 schematisch angedeuteten Karosserieteil 2 eines Nutzfahrzeuges auf. Der doppelarmige Stützarm 1 ist karosserieseitig an einem Lagerbock 3 um eine vertikale Achse 4 schwenkbar befestigt.

In einem aerodynamisch geformten Gehäuse 5 des Spiegels ist eine Trägerplatte 6 angeordnet, die mittels einer Haltevorrichtung 7 an den beiden Haltezapfen 8,9 an den freien Enden des doppelarmigen Stützarmes 1 befestigt ist. An dieser Trägerplatte 6 ist direkt das Gehäuse 5 gehalten. An geeigneten Stellen kann die Trägerplatte 6 nicht näher dargestellte Aussparungen zur Gewichtsreduzierung aufweisen.

An der Trägerplatte 6 sind ferner zwei Spiegelscheiben 10,11 mittels jeweils eines als Kugelgelenk ausgebildeten Schwenklagers 12,13 verschwenkbar gelagert. Die untere Spiegelscheibe 10 stellt die nur leicht gewölbte Hauptspiegelscheibe dar, die obere Spiegelscheibe 11 ist ein kleinerer Weitwinkelspiegel.

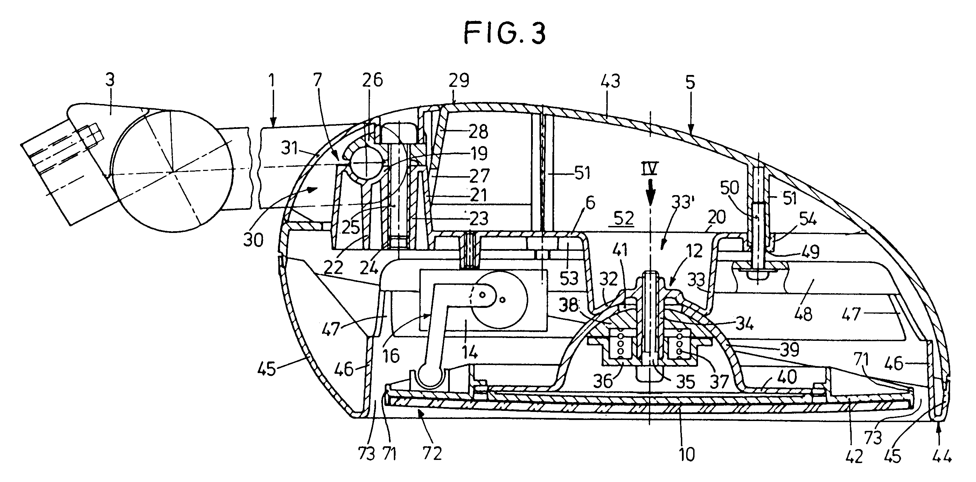

Der unteren Spiegelscheibe 10 sind zwei Verstellaggregate 14,15 in Form elektrischer Getriebemotoren zugeordnet, die mit der Spiegelscheibe 10 jeweils über ein in Fig. 3 angedeutetes Schubkurbelgetriebe 16 gekoppelt sind. Durch die Verstellaggregate 14,15 kann die Spiegelscheibe 10 um zwei zueinander senkrechte Verstellachsen 17,18 verstellt werden, um eine Einstellung der Spiegelscheibe 10 durchzuführen.

Die Haltevorrichtung 7 ist als Klemmvorrichtung ausgebildet, deren Klemmgegenlager 19 für die Haltezapfen 8,9 des Stützarmes 1 einstückig mit der Trägerplatte 6 ausgebildet ist. Das Klemmgegenlager 19 ist dabei am freien Ende eines aus der Plattenebene 20 der Trägerplatte 6 vorstehenden, im wesentlichen quaderförmigen Vorsprung 21 angeordnet, der auf seiner Innenseite hohl ist und durch einstückig angeformte Versteifungsrippen 22 verstärkt ist. An den Vorsprung 21 ist ferner auf seiner Innenseite eine Hülse 23 einstückig angeformt, die ein Innengewinde 24 für die von außen einschraubbare Befestigungsschraube 25 für die das Klemmglied der Klemmvorrichtung 7 bildende Klemmpratze 26 aufweist. Mittels der Befestigungsschraube 25 ist die Klemmpratze 26 kraftschlüssig mit dem Klemmgegenlager 19 verbindbar, womit die Trägerplatte 6 unter dem Klemmschluß der Klemmvorrichtung fest mit den Haltezapfen 8,9 des Stützarmes 1 verbunden ist.

In der in Fig. 3 gezeigten Montagestellung ragt der Vorsprung 21 durch eine Gehäuseöffnung 27, die im winkelförmig ausgestalteten Boden 28 einer auf der Gehäuseaußenseite 29 angeordneten Gehäusevertiefung 30 angeordnet ist. Klemmgegenlager 19 und Klemmpratze 26 der Klemmvorrichtung 7 sind also auf der Gehäuseaußenseite 29 in der Gehäusevertiefung 30 angeordnet und damit besonders leicht für eine gegenseitige Montage von Spiegel und Stützarm 1 zugänglich. Die Klemmvorrichtung 7 ist durch eine Abdeckhaube 31 nach außen abgedeckt, die innerhalb der Gehäusevertiefung 30 angeordnet ist und von der Befestigungsschraube 25 gehalten wird.

Im folgenden wird die Ausgestaltung der beiden Schwenklager 12,13 anhand von Fig. 3 beschrieben, die das der unteren Spiegelscheibe 10 zugeordnete Schwenklager 12 zeigt. Das obere Schwenklager 13 ist entsprechend ausgestaltet.

Das Schwenklager 12 ist als Kugelgelenk an der Trägerplatte 6 ausgestaltet, wobei die Lagerschale 32 des Kugelgelenks einstückig mit der Trägerplatte 6 ausgebildet ist. Die Lagerschale 33 ist dabei am freien Ende eines aus der Plattenebene 20 der Trägerplatte 6 vorstehenden, ringförmigen Vorsprunges 33 angeordnet. Der Vorsprung 32 mit der Lagerschale 32 ist dabei als hutförmige Auswölbung 33' der Trägerplatte 6 ausgebildet und erstreckt sich in die dem Vorsprung 21 entgegengesetzte Richtung.

Zentral weist die Lagerschale 32 eine ebenfalls einstückig mit ihr ausgebildete, vertikal abstehende Gewindehülse 34 auf, in der eine Befestigungsschraube 35 für eine auf der Gewindehülse 34 sitzende Widerlagerkappe kappe 36 eingeschraubt ist. An der Innenseite der Widerlagerkappe 36 stützt sich eine Druckfeder 37 ab, die ein kugelsegmentförmiges Andruckelement 38 in Richtung zur lagerschale 32 des Schwenklagers 12 beaufschlagt. Zwischen dem Andruckelement 38 und der lagerschale 32 verläuft eine halbkugelförmige Gegenlagerschale 39, die an eine ebene Halteplatte 40 für die Spiegelscheibe 10 angeformt ist. Die Gegenlagerschale 39 weist eine zentrale Öffnung 41 auf, durch die unter Spiel die Gewindehülse 34 hindurchragt. An der Halteplatte 40 ist eine Spiegeltragplatte 42 lösbar befestigt, mit der die Spiegelglasscheibe 10 durch Verklebung dauerhaft verbunden ist.

Wie aus den Figuren weiterhin deutlich wird, ist das Gehäuse 5 zweiteilig aus einem Gehäusehauptteil 43 und einem die Spiegelscheiben 10, 11 seitlich umgebenden Rahmenteil 44 gebildet. Das Rahmenteil 44 weist dabei einen außenliegenden Randbereich 45 sowie die Ränder der Spiegelscheiben 10,11 mit Abstand flankierende, innenliegende Wandabschnitte 46 auf. Von diesen erstrecken sich in Richtung zur Trägerplatte 6 einstückig angeformte Verbindungsstreben 47, die zwischen ihren Enden jeweils einen parallel zur Trägerplatte 6 verlaufenden Haltesteg 48 aufweisen. Mit diesen Haltestegen 48 ist das Rahmenteil 44 an einstückig in die Trägerplatte 6 eingeformten Befestigungselementen mittels einer Befestigungsschraube 50 befestigt. Bei diesen Befestigungselementen handelt es sich um Öffnungen 49 in der Trägerplatte 6, die in topfförmigen Vertiefungen angeordnet sind. Die Befestigungsschrauben halten gleichzeitig das Gehäusehauptteil 43, indem die Befestigungsschrauben 50 die Öffnungen 49 an der Trägerplatte 6 durchgreifen und in Gewindehülsen 51 am Gehäusehauptteil 43 eingreifen, die einstückig mit den, Gehäusehauptteil 43 ausgebildet sind. Das Gehäusehauptteil 43 und das Rahmenteil 44 sind also von den einander abgewandten Flachseiten 52,53 der Trägerplatte 6 her mit dieser und gegenseitig verbunden. Trägerplatte 6, Gehäusehauptteil 43 und Rahmenteil 44 sind also nach Art einer Sandwich-Konstruktion gegenseitig miteinander verbunden.

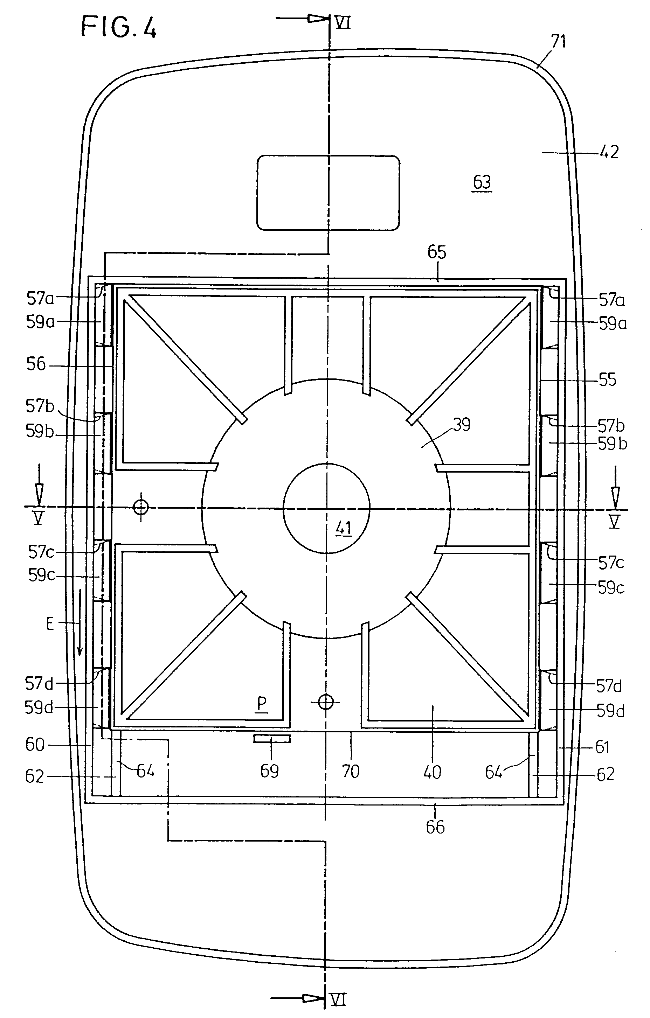

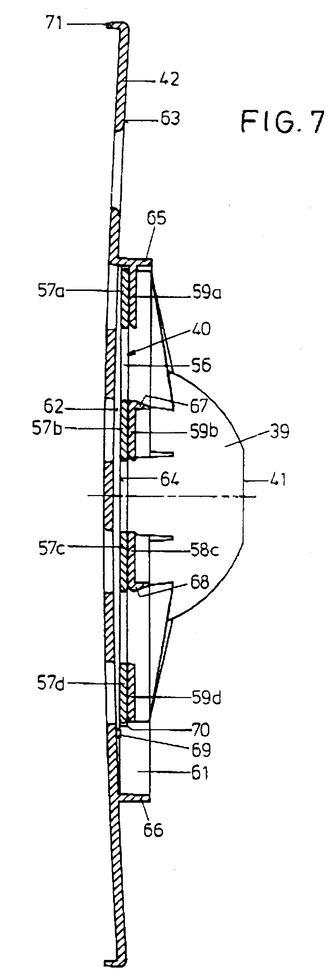

Die bereits oben angesprochene lösbare Befestigung jeder Spiegeltragplatte 42 an der einstückig mit der Gegenlagerschale 39 des Schwenklagers 12 bzw. 13 ausgebildeteten Halteplatte 40 ist anhand der Fig. 4 bis 7 zu erläutern. So ist die Halteplatte 40 im Bereich ihrer vertikal verlaufenden, gegenüberliegenden, parallelen Seitenkanten 55,56 jeweils mit vier in Draufsicht rechteckigen Verbindungsvorsprüngen 57a,b,c,d versehen, die einstückig an die Halteplatte 40 angeformt sind und in der Plattenebene P liegen. Mit diesen Verbindungsvorsprüngen 57a,b,c,d ist die Halteplatte 40 unter Klemmschluß in komplementär geformte Hinterschneidungsbereiche 58a,b,c,d an der Spiegeltragplatte 42 in parallel zur Plattenebene P weisender Einschubrichtung E einschiebbar. Diese Hinterschneidungsbereiche 58a,b,c,d sind einerseits durch Haltefortsätze 59a,b,c,d gebildet, die einstückig an parallel zur Einschubrichtung E der Verbindungsvorsprünge 57a,b,c,d beiderseits der Halteplatte 40 verlaufende, nach innen stehende Stege 60,61 an der Spiegeltragplatte 42 angesetzt sind. Diese Haltefortsätze 59a,b,c,d sind in Draufsicht ebenfalls rechtwinklig ausgebildet. Die Hinterschneidungsbereiche 58a,b,c,d sind auf beiden Seiten der Spiegeltragplatte 42 auf den den Haltefortsätzen 59a,b,c,d gegenüberliegenden Seiten durch eine durchgehende, parallel zur Einschubrichtung E verlaufende Abstützrippe 62 an der Innenseite 63 der Spiegeltragplatte 42 begrenzt. Wie aus Fig. 4 erkennbar ist, verlaufen zwei solche Abstützrippen 62 fluchtend mit den beiden Seitenkanten 55,56 in Einschubrichtung E. Die Oberkante 64 dieser Abstützrippen 62 ist eben ausgebildet. Die Verbindungsvorsprünge 57a,b,c,d und Haltefortsätze 59a,b,c,d sind bezogen auf die Einschubrichtung E etwa gleich lang, wie aus Fig. 4 und 7 besonders deutlich wird. Hier ist die Spiegeltragplatte 42 in Endmontagestellung der Halteplatte 40 gezeigt, wobei sich die mit durchgezogenen Linien dargestellten Haltefortsätze 59a,b,c,d der Spiegeltragplatte 42 und die strichliert dargestellten Verbindungsvorsprünge 57a,b,c,d praktisch überdecken.

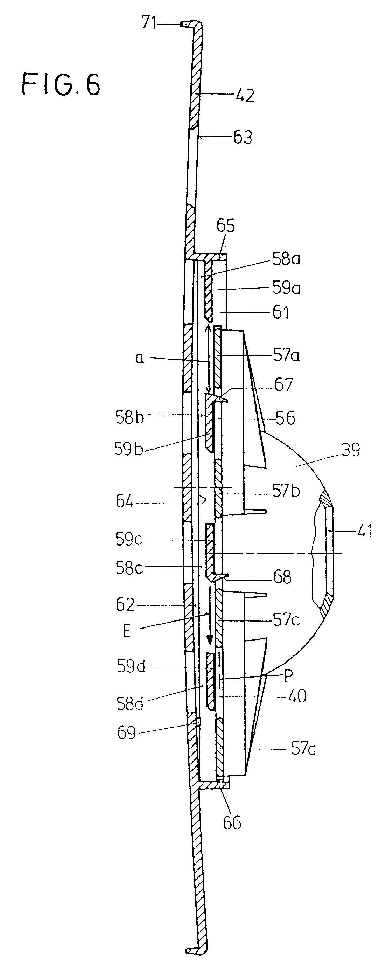

Der freie Abstand a zwischen den Haltefortsätzen 59a,b,c,d an der Spiegeltragplatte 42 ist bezogen auf die Einschubrichtung E geringfügig größer als die Länge der Verbindungsvorsprünge 57a,b,c,d in dieser Richtung. Insofern kann ausgehend von der in Fig. 6 gezeigten Montage-Ausgangsposition die Spiegeltragplatte 42 quer zur Einschubrichtung E auf die Halteplatte 40 aufgeschoben werden, wobei die Verbindungsvorsprünge 57a,b,c,d und Haltefortsätze 59a,b,c,d durch die jeweiligen Zwischenräume zwischen den ihnen komplementären Elementen hindurchtreten, bis die Halteplatte 40 in Anlage an die Abstützrippen 62 gelangt. Durch eine anschließende schließende Relativverschiebung von Halteplatte 40 und Spiegeltragplatte 42 zueinander werden die Verbindungsvorsprünge 57a,b,c,d in die entsprechenden Hinterschneidungsbereiche 58a,b,c,d unter Klemmschluß eingeschoben, bis die in Fig. 7 gezeigte Montage-Endposition erreicht ist und beide Platten 40,42 stabil vibrationslrei miteinander verbunden sind.

Bei der Einschubbewegung dienen die einstückig an die Spiegeltragplatte 42 angeformten Querstege 65,66 zwischen den Enden der Stege 60,61 zur Montagehilfe. So dient der in Fig. 6 unten liegende Quersteg 66 als Positionierhilfe beim Positionieren der Halteplatte 40 und Spiegeltragplatte 42 zueinander. Der obere Quersteg 65 dient als Endanschlag für die Schiebebewegung, so daß die in den Fig. 4 und 7 gezeigte Montage-Endposition exakt definiert ist. Nicht zuletzt bilden die Stege 60,61 und Querstege 65,66 ein umlaufendes Rahmenteil zur Stabilisierung und Abdeckung der gesamten Verbindungskonstruktion.

Als weitere Einführhilfen dienen die von den Haltefortsätzen 59b,c nach innen abstehenden, abgeschrägten Einfühmasen 67,68, die jeweils an den in bzw. entgegen der Einschubrichtung E weisenden Enden dieser Haltefortsätze 59b,c einstückig angeformt sind.

Als weitere Sicherung der Verbindung zwischen Halteplatte 40 und Spiegeltragplatte 42 in der Montageendstellung dient die an der Innenseite 63 etwa im Mittenbereich zwischen den beiden Abstützrippen 62 angeordnete Rastnase 69, die die entgegen der Einschubrichtung E weisende Querseitenkante 70 der Halteplatte 40 in der in Fig. 4 gezeigten Montage-Endstellung untergreift.

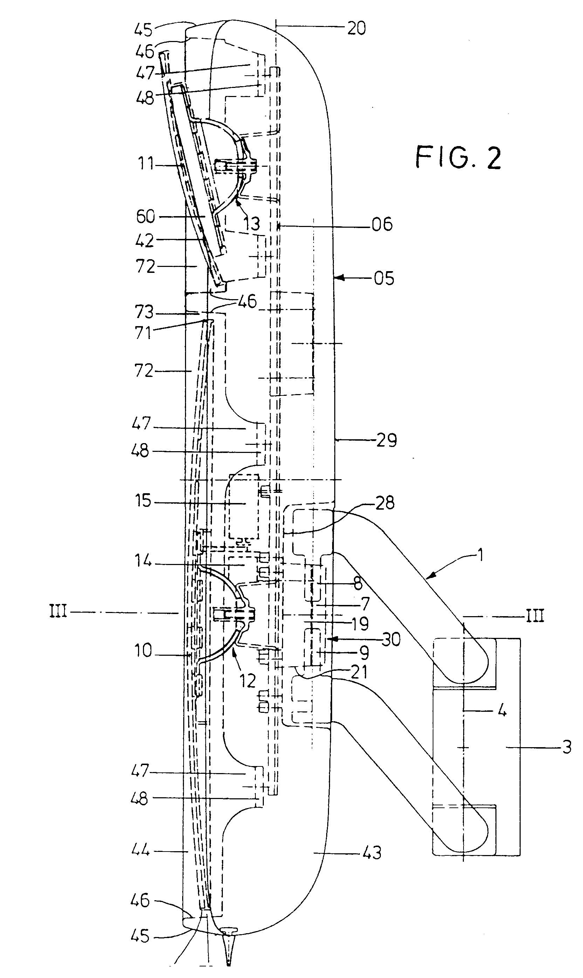

Der relative Verschiebeweg zwischen Halteplatte 40 und Spiegeltragplatte 42 ist im übrigen größer als der zwischen dem Außenrand 71 der Spiegeltragplatte 42 und dem die Gehäuseöffnung 72 umgrenzenden Wandabschnitt 46 verbleibende Abstandsspalt 73. Damit ist in einer normalen Rückblickstellung des Spiegels, wie sie in Fig. 2 beim unteren Hauptspiegel (Spiegelscheibe 10) gezeigt ist, die Spiegeltragplatte 42 so vom Gehäuse 5 umfaßt, daß eine vollständige Lösung des Schiebeeingriffes zwischen Spiegeltragplatte 42 und Halteplatte 40 unmöglich ist. Bevor der Schiebeeingriff der Verbindungsvorsprünge 57a,b,c,d in die Hinterschneidungsbereiche 58a,b,c,d gelöst wird, stößt die Spiegeltragplatte 42 nämlich an den entsprechenden Wandabschnitt 46 des Gehäuses an.

Erst wenn die Baugruppe aus Spiegeltragplatte 42 und Halteplatte 40 mit Hilfe des Schwenklagers 12,13 in eine stark verkippte Montagestellung verschwenkt worden ist, wie dies anhand des Zusatzspiegels (Spiegelscheibe 11) in Fig. 2 angedeutet ist, kann die Spiegeltragplatte 42 vollständig aus der Montage-Endstellung in die in Fig. 6 gezeigte Montage-Ausgangsstellung verschoben und von der Halteplatte 40 abgehoben werden. Ein Herausnehmen der Spiegeltragplatte 42 und ein Wiedereinsetzen ist also nur in einer solchen stark verklippten Stellung möglich.

## Patentansprüche

1. Verstellbare Rückspiegelanordnung für Kraftfahrzeuge mit einem Gehäuse (5), einer im Gehäuse (5) angeordneten Lageranordnung (Schwenklager 12,13) mit insbesondere einstückig damit verbundener Halteplatte (40) zur verstellbaren Lagerung eines Rückspiegels (Spiegelscheiben 10,11) und einer mit der Halteplatte (40) verbindbaren Spiegeltragplatte (42) zur Halterung einer Spiegelscheibe (10,11), die in einer Gehäuseöffnung (72) angeordnet ist, **dadurch gekennzeichnet, daß** die Halteplatte (40) im Bereich zweier gegenüberliegender paralleler Seitenkanten (55,56) mit Verbindungsvorsprügen (57a,b,c,d) versehen ist, die zur Verbindung mit der Spiegeltragplatte (42) unter Klemmschluß in komplementär geformte Hinterschneidungsbereiche (58a,b,c,d) an der Spiegeltragplatte (42) im wesentlichen parallel zur Plattenebene (P) einschiebbar sind.

2. Rückspiegelanordnung nach Anspruch 1, **dadurch gekennzeichnet, daß** die Verbindungsvorsprünge (57a,b,c,d) einstückig an die Halteplatte (40) angeformt sind und an deren Seitenkanten (55,56) in der Plattenebene (P) liegen.

3. Rückspiegelanordnung nach Anspruch 1 oder 2, **dadurch gekennzeichnet, daß** die Spiegeltragplatte (42) beiderseits der Halteplatte (40) mit jeweils nach innen stehenden, parallel zur Einschubrichtung (E) der Verbindungsvorsprünge (57a,b,c,d) verlaufenden Stegen (60,61) versehen ist, von denen parallel zur Plattenebene (P) in aufeinander zu weisender Richtung Haltefortsätze (59a,b,c,d) zur Bildung der Hinterschneidungsbereiche (58a,b,c,d) abstehen.

4. Rückspiegelanordnung nach Anspruch 3, **dadurch gekennzeichnet, daß** die Hinterschneidungsbereiche (58a,b,c,d) auf der den Haltefortsätzen (59a,b,c,d) gegenüberliegenden Seite jeweils durch durchgehende, parallel zur Einschubrichtung (E) verlaufende Abstützrippen (62) an der Innenseite (63) der Spiegeltragplatte (42) begrenzt sind.

5. Rückspiegelanordnung nach einem der Ansprüche 1 bis 4, **dadurch gekennzeichnet, daß** die Verbindungsvorsprünge (57a,b,c,d) und Haltefortsätze (59a,b,c,d) bezogen auf die Einschubrichtung (E) etwa gleich lang sind.

6. Rückspiegelanordnung nach einem der Ansprüche 3 bis 5, **dadurch gekennzeichnet, daß** bezogen auf die Einschubrichtung (E) der freie Abstand (a) zwischen den Haltefortsätzen (59a,b,c,d) geringfügig größer als die Länge der Verbindungsvorsprünge (57a,b,c,d) ist.

7. Rückspiegelanordnung nach einem der Ansprüche 3 bis 6, **dadurch gekennzeichnet, daß** die parallel zur Einschubrichtung (E) verlaufenden Stege (60,61) an ihren Enden durch Querstege (65,66) zu einem umlaufenden Rahmenteil verbunden sind.

8. Rückspiegelanordnung nach einem der Ansprüche 3 bis 7, **dadurch gekennzeichnet, daß** an den Haltefortsätzen (59b,c) auf den den Hinterschneidungsbereichen (58b,c) abgewandten Innenseiten Einführnasen (67,68) zur gegenseitigen Führung der Platten (40,42) beim Aufstecken der Spiegeltragplatte (42) auf die Halteplatte (40) angeordnet sind.

9. Rückspiegelanordnung nach einem der Ansprüche 1 bis 8, **dadurch gekennzeichnet, daß** an der Spiegeltragplatte (42) und Halteplatte (40) eine Verrastung zur Sicherung der Spiegeltragplatte (42) an der Halteplatte (40) in der Montage-Endstellung vorgesehen ist.

10. Rückspiegelanordnung nach Anspruch 9, **dadurch gekennzeichnet, daß** die Verrastung durch eine von der Innenseite (63) der Spiegeltragplatte (42) abstehende Rastnase (69) gebildet ist, die die entgegen der Einschubrichtung (E) weisende Querseitenkante (70) der Halteplatte (40) in Montage-Endstellung hintergreift.

11. Rückspiegelanordnung nach einem der Ansprüche 1 bis 10, **dadurch gekennzeichnet, daß** einerseits der Außenrand (71) der Spiegeltragplatte (42) in einer Rückblickstellung der Lageranordnung (Schwenklager 12,13) derart von dem die Gehäuseöffnung (72) bildenden Rand (Wandabschnitt 46) des Gehäuses (5) unter Freilassung eines Abstandsspaltes (73) umfaßt ist, daß eine vollständige Lösung des Schiebeeingriffs zwischen Spiegeltragplatte (42) und Halteplatte (40) unmöglich ist und daß andererseits die Spiegeltragplatte (42) in einer stark verkippten Montagestellung der Lageranordnung (Schwenklager 12,13) unter Lösung des Schiebeeingriffs mit der Halteplatte (40) aus der Gehäuseöffnung (72) herausnehmbar bzw. unter Herstellung des Schiebeeingriffs darin einsetzbar ist.

## Claims

1. An adjustable rear-view mirror arrangement for motor vehicles comprising a housing (5), a bearing arrangement (pivoting hinge 12, 13) arranged in the housing (5) with a retaining plate (40) in particular integrally united with the bearing arrangement for the adjustable positioning of a rear-view mirror (mirror glasses 10, 11) and a mirror supporting plate (42) fastenable to the retaining plate (40) for the mounting of a mirror glass (10, 11) and arranged in a housing opening (72), **characterized in that** in the vicinity of two opposite parallel lateral edges (55, 56), the retaining plate (40) is provided with joining projections (57a, b, c, d), which for being fastened to the mirror supporting plate (42), are insertable by clamping locking into rear-recessed portions (58a, b, c, d) of complementary shape on the mirror supporting plate (42) substantially in parallel to the plate plane (P).

2. A rear-view mirror arrangement according to claim 1, **characterized in that** the joining projections (57a, b, c, d) are formed in one piece on the retaining plate (40) and located on the latter's lateral edges (55, 56) in the plate plane (P).

3. A rear-view mirror arrangement according to claim 1 or 2, **characterized in that** on both sides of the retaining plate (40), the mirror supporting plate (42) is provided with webs (60, 61) projecting inwards and extending parallel to the direction of insertion (E) of the joining projections (57a, b, c, d), from which webs (60, 61) retaining projections (59a, b, c, d) project in a direction towards each other for the forming of rear-recessed portions (58a, b, c, d).

4. A rear-view mirror arrangement according to claim 3, **characterized in that** on the side opposite the retaining projections (59a, b, c, d), the rear-recessed portions (58a, b, c, d) are defined by continuous supporting ribs (62) extending parallel to the direction of insertion (E) on the inside (63) of the mirror supporting plate (42).

5. A rear-view mirror arrangement according to one of the claims 1 to 4, **characterized in that** the joining projections (57a, b, c, d) and the retaining projections (59a, b, c, d) are of about equal length referred to the direction of insertion (E).

6. A rear-view mirror arrangement according to one of the claims 3 to 5, **characterized in that** referred to the direction of insertion (E), the free distance (a) between the retaining projections (59a, b, c, d,) slightly exceeds the length of the joining projections (57a, b, c, d).

7. A rear-view mirror arrangement according to one of the claims 3 to 6, **characterized in that** the webs (60, 61) extending parallel to the direction of insertion (E) are united at their ends by transverse webs (65, 66) to form an encircling frame part.

8. A rear-view mirror arrangement according to one of the claims 3 to 7, **characterized in that** on the insides facing away from the rear-recessed portions (58b, c), insertion lugs (67, 68) are arranged on the retaining projections (59b, c) for the guidance of the plates (40, 42) relative to each other when the mirror supporting plate (42) is placed on the retaining plate (40).

9. A rear-view mirror arrangement according to claim 1, **characterized in that** a locking is provided on the mirror supporting plate (42) and retaining plate (40) for securing the mirror supporting plate (42) on the retaining plate (40) in the final position of mounting.

10. A rear-view mirror arrangement according to claim 9, **characterized in that** the locking is formed by a locking projection (69) projecting from the inside (63) of the mirror supporting plate (42) and backing the transverse lateral edge (70), directed opposite the direction of insertion (E), of the retaining plate (40) in the final position of mounting.

11. A rear-view mirror arrangement according to one of the claims 1 to 10, **characterized in that** on the one hand, in a rear-view position of the bearing arrangement (pivoting hinge 12, 13), the external edge (71) of the mirror supporting plate (42) is encircled by the edge (wall section 46) of the housing forming the housing opening (72) while leaving a spacing gap (73) such that a complete release of the sliding engagement of the mirror supporting plate (42) with the retaining plate (40) is impossible, and in that on the other hand, in an extremely tilted position of mounting of the bearing arrangement (pivoting hinge 12, 13), the mirror supporting plate (42) is removable out of the housing opening (72) by the releasing of the sliding engagement with the retaining plate (40) and insertable therein by the production of the sliding engagement.

## Revendications

1. Ensemble rétroviseur réglable pour véhicules à moteur, comprenant un boîtier (5) et un ensemble de support (supports pivotants 12, 13) qui est disposé dans le boîtier (5) et qui comprend en particulier une plaque de retenue (40), qui fait corps avec lui pour monter un rétroviseur (glaces réfléchissantes 10, 11) de manière réglable, et une plaque porte-rétroviseur (42) pouvant être reliée à la plaque de retenue (40) pour retenir une glace réfléchissante (10, 11) disposée dans une ouverture de boîtier (72), caractérisé en ce que, dans la zone de deux bords latéraux parallèles opposés (55, 56), la plaque de retenue (40) est munie de saillies de liaison (57a,b,c,d) qui, pour créer une liaison avec la plaque porte-rétroviseur (42), peuvent être insérées par emboîtement, sensiblement parallèlement au plan (P) de la plaque, dans des zones en décrochement de forme complémentaire (58a,b,c,d) situées sur la plaque porte-rétroviseur (42).

2. Ensemble rétroviseur selon la revendication 1, caractérisé en ce que les saillies de liaison (57a,b,c,d) sont moulées d'un seul tenant avec la plaque de retenue (40) et se trouvent sur les bords latéraux (55, 56) de celle-ci dans le plan (P) de la plaque.

3. Ensemble rétroviseur selon la revendication 1 ou 2, caractérisé en ce que, de part et d'autre de la plaque de retenue (40), la plaque porte-rétroviseur (42) est munie de barrettes (60, 61) qui dépassent vers l'intérieur et s'étendent parallèlement à la direction d'insertion (E) des saillies de liaison (57a,b,c,d) et desquelles des prolongements de retenue (59a,b,c,d) tournés les uns vers les autres dépassent parallèlement au plan (P) de la plaque pour former les zones en décrochement (58a,b,c,d).

4. Ensemble rétroviseur selon la revendication 3, caractérisé en ce que, sur le côté faisant face aux prolongements de retenue (59a,b,c,d), les zones en décrochement (58a,b,c,d) sont chacune délimitées par une nervure d'appui continue (62) qui est parallèle à la direction d'insertion (E) et qui se trouve sur la face intérieure (63) de la plaque porte-rétroviseur (42).

5. Ensemble rétroviseur selon l'une des revendications 1 à 4, caractérisé en ce que, par rapport à la direction d'insertion (E), les saillies de liaison (57a,b,c,d) et les prolongements de retenue (59a,b,c,d) sont de longueur sensiblement égale.

6. Ensemble rétroviseur selon l'une des revendications 3 à 5, caractérisé en ce que, par rapport à la direction d'insertion (E), la distance libre (a) entre les prolongements de retenue (59a,b,c,d) est légèrement supérieure à la longueur des saillies de liaison (57a,b,c,d).

7. Ensemble rétroviseur selon l'une des revendications 3 à 6, caractérisé en ce que les barrettes (60, 61) parallèles à la direction d'insertion (E) sont reliées à leurs extrémités par des barrettes transversales (65, 66) pour former une partie de cadre périphérique.

8. Ensemble rétroviseur selon l'une des revendications 3 à 7, caractérisé en ce que, sur les faces intérieures des prolongements de retenue (59b,c) opposées aux zones en décrochement (58b,c), sont disposés des ergots d'introduction (67, 68) pour guider mutuellement les plaques (40, 42) lors de la mise en place de la plaque porte-rétroviseur (42) sur la plaque de retenue (40).

9. Ensemble rétroviseur selon l'une des revendications 1 à 8, caractérisé en ce que, sur la plaque porte-rétroviseur (42) et sur la plaque de retenue (40), est prévu un moyen de crantage pour bloquer la plaque porte-rétroviseur (42) contre la plaque de retenue (40) en position de montage finale.

10. Ensemble rétroviseur selon la revendication 9, caractérisé en ce que le moyen de crantage est formé par un ergot de crantage (69) qui dépasse de la face intérieure (63) de la plaque porte-rétroviseur (42) et qui, en position de montage finale, s'engage derrière le bord latéral transversal (70) de la plaque de retenue (40) orienté à l'opposé de la direction d'insertion (E).

11. Ensemble rétroviseur selon l'une des revendications 1 à 10, caractérisé en ce que, d'une part, lorsque l'ensemble de support (supports pivotants 12, 13) se trouve dans une position permettant de regarder vers l'arrière, le bord extérieur (71) de la plaque porte-rétroviseur (42) est entouré par le bord (portion de paroi 46) formant l'ouverture (72) du boîtier (5) en ménageant un interstice (73), de sorte que l'accrochage coulissant entre la plaque porte-rétroviseur (42) et la plaque de retenue (40) ne peut pas être complètement supprimé, et en ce que, d'autre part, lorsque l'ensemble de support (supports pivotants 12, 13) se trouve dans une position de montage très inclinée, la plaque porte-rétroviseur (42) peut être retirée de l'ouverture de boîtier (72) en supprimant l'accrochage coulissant avec la plaque de retenue (40) ou peut y être mise en place en créant l'accrochage coulissant.
